# EUROPÄISCHE PATENTSCHRIFT

(11) **EP 3 634 699 B1**
(45) Veröffentlichungstag und Bekanntmachung des Hinweises auf die Patenterteilung: **01.12.2021**
(21) Anmeldenummer: 18727026.9
(22) Anmeldetag: 01.06.2018
(51) Int. Cl.: B26D 3/30, B26D 7/06, B26D 1/553, B26D 1/58, A23N 5/00, B26D 1/45, B26D 7/08, B26D 1/00

(54) **SCHNEIDEVORRICHTUNG ZUR BEARBEITUNG VON PRODUKTEINHEITEN**
CUTTING DEVICE FOR MACHINING PRODUCT UNITS
DISPOSITIF DE COUPE POUR LE TRAITEMENT D'UNITÉS DE PRODUIT

(30) Priorität: 07.06.2017 EP 17174864
(43) Veröffentlichungstag der Anmeldung: 15.04.2020
(73) Patentinhaber: A O Schallinox GmbH, 8581 Schocherswil (CH)
(72) Erfinder: CARRASCO, César, 8581 Schocherswil (CH)
(74) Vertreter: Rutz & Partner
(86) Internationale Anmeldenummer: PCT/EP2018/064540
(87) Internationale Veröffentlichungsnummer: WO 2018/224410

(56) Entgegenhaltungen:
- WO-A1-2015/150260
- CN-A- 106 393 192
- DE-U1-202006 003 637

## Beschreibung

Die Erfindung betrifft eine Schneidevorrichtung zur Bearbeitung eines Prozessguts, insbesondere zur Bearbeitung von Nüssen, die aufgeteilt und gegebenenfalls von einer Schale befreit werden müssen.

In zahlreichen industriellen Anwendungen, insbesondere in der Nahrungsmittelindustrie, sind Produkte mit vorgesehenen Abmessungen bereitzustellen. Oft werden Nahrungsmittel, wie Brot, Wurstwaren oder Käse in Tranchen aufgeteilt und verpackt. Oft sind auch Naturprodukte, wie Gemüse, Früchte, Nüsse und dergleichen zu bearbeiten.

Dazu werden z.B. Schneidevorrichtungen mit rotierenden Schneidscheiben vorgesehen, welche mit hohen Taktfrequenzen gegen die Produkte geführt werden, um die erforderlichen Schnitte auszuführen. Schneidevorrichtung dieser Art weisen wesentliche Nachteile auf. Der Parallelbetrieb mehrerer Schneidscheiben ist mit Schwierigkeiten verbunden. Ferner resultiert eine geringe Schneidequalität mit erheblichen Materialverlusten. Kleine Produkte, wie Nüsse, können daher kann bearbeitet werden. Ferner benötigen Schneidscheiben viel Raum und entsprechende Sicherheitsabstände.

Aus der WO2015150260A1 ist eine Vorrichtung bekannt, die dem Schneiden eines Prozessguts mit einer Klinge dient, die mit einer von einem Gerüst gehaltenen Antriebsvorrichtung verbunden ist, die mehrere Aktuatoren aufweist, die einerseits je über ein erstes Drehgelenk mit der Klingenhalterung und die andererseits je über ein zweites Drehgelenk derart mit dem Gerüst verbunden sind, dass die Klingenhalterung allein von den Aktuatoren gehalten und innerhalb eines Arbeitsvolumens verschiebbar und gegebenenfalls drehbar ist. Innerhalb des Arbeitsvolumens kann die Klinge vor und zurück, nach unten und nach oben und vorzugsweise auch zur Seite gefahren werden. Diese Vorrichtung erlaubt es, grössere Gegenstände, die z.B. über ein Förderband zugeführt werden, wahlweise zu schneiden. Für kleine Produkte, wie Nüsse, ist diese Schneidevorrichtung nicht geeignet.

Aus der US5671661A ist eine Fördervorrichtung bekannt, mittels der kleine Gegenstände, z.B. Haselnüsse, vereinzelt in mehreren Reihen gefördert werden können. Dazu ist eine Platte mit Öffnungen vorgesehen, die während des Bearbeitungsprozesses jeweils ein Produkt, z.B. eine Haselnuss aufnehmen können. In solchen Fördervorrichtungen vereinzelt geförderte Produkte, wie Haselnüsse, können mittels bekannten Schneidevorrichtungen jedoch nicht oder nicht rationell bearbeitet, z.B. von einer Schale befreit oder geschnitten werden.

Der vorliegenden Erfindung liegt daher die Aufgabe zugrunde, eine verbesserte Schneidevorrichtung mit wenigstens einer Klinge zu schaffen.

Insbesondere ist eine Schneidevorrichtung zu schaffen, mittels der vereinzelte Produkteinheiten vorteilhaft bearbeitet, z.B. von einer Schale befreit und/oder aufgetrennt bzw. geschnitten werden können.

Produkteinheiten, wie Haselnüsse, sollen von einer Schale befreit und/oder präzise in zwei Hälften aufgeteilt werden können, ohne dass Verluste auftreten. Die Bearbeitung der Nahrungsmittelprodukte soll auch dann optimal gelingen, wenn deren Abmessungen innerhalb eines breiten Toleranzbereichs von z.B. 10% bis 50% ändern.

Die Nahrungsmittelprodukte sollen stets präzise in die gewünschten Anteile aufgeteilt werden können. Alternativ sollen Proben aus den Produkteinheiten entnommen werden können, um diese periodisch prüfen zu können.

Die aufgetrennten Nahrungsmittelprodukte sollen keinen unerwünschten Einwirkungen ausgesetzt werden und in optimaler Qualität abgegeben werden.

Sofern eine Schale von einem Nahrungsmittelprodukt, wie einer Nuss getrennt werden soll, so soll dies ohne Beschädigung des Nahrungsmittelprodukts bzw. des Nusskerns gelingen. Ferner soll eine zuverlässige Trennung zwischen Schale und Nahrungsmittelprodukt möglich sein, sodass diese getrennt abgelegt werden können.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Die Vorrichtung umfasst wenigstens eine innerhalb eines Arbeitsraums oder Arbeitsbereichs bewegbare Klinge zum Schneiden von Produkteinheiten und eine Fördervorrichtung, in der die Produkteinheiten vereinzelt in den Arbeitsraum der Klinge förderbar sind. Der Arbeitsraum ist ein Arbeitsvolumen, innerhalb dessen die Schneidekante der Klinge wahlweise bewegbar ist, um ein Nahrungsmittelprodukt, gegebenenfalls eine Schale, anzuschneiden oder vollständig zu zerschneiden.

Erfindungsgemäss ist vorgesehen, dass die Fördervorrichtung wenigstens einen der Klinge zugeordneten zweiteiligen Förderkanal aufweist, in dem auf einer Seite erste Förderelemente und auf der anderen Seite zweite Förderelemente, die einander paarweise zugeordnet sind, geführt sind, wobei die ersten und zweiten Förderelemente je eine Ausnehmung aufweisen, die zur anteilsweisen Aufnahme eines vereinzelten Nahrungsmittelprodukts vorgesehen ist, und wobei die einander zugewandten Seiten der ersten und zweiten Förderelemente den dazwischen frei liegenden Arbeitsraum begrenzen, sodass die Klinge innerhalb des Arbeitsraums teilweise oder ganz durch die beidseits des Arbeitsraums in den einander zugehörigen ersten und zweiten Förderelementen gehaltenen Produkteinheiten hinein oder hindurch führbar ist.

Die Förderelemente können derart ausgestaltet sein, dass beliebige Produkteinheiten, wie Nahrungsmittelprodukte im Rohzustand oder in einem bearbeiteten Zustand erfasst und bearbeitet werden können. Produkteinheiten können z.B. Kakaobohnen; Kaffeebohnen; Gemüse, wie Tomaten und Kartoffeln; gekochte Eier; Teig mit Füllung; gefrorenes oder getrocknetes Fleisch; Nüsse, wie Haselnüsse; Schalenfrüchte, wie Orangen, Mandarinen, Pampelmusen, Melonen; Früchtekerne wie Mangokerne; Milchprodukte, wie Käse; sowie Teile aus nicht biologischen Materialien, wie Metall, Holz, Stein, Glas, Keramik oder dergleichen. Die Ausnehmungen in den Förderelementen können Kugelsegmente oder Quadersegmente umfassen.

Vorzugsweise werden vereinzelte Produkteinheitensequenziell in den Arbeitsraum eingeführt und bearbeitet. Bei der Wahl eines grösseren Arbeitsraumes ist es möglich, mehrere Produkteinheiten vereinzelt in den Arbeitsraum einzuführen und gleichzeitig zu bearbeiten. Sofern jedoch nur eine Produkteinheit in den Arbeitsraum eingeführt wird, kann diese mit einer vorzugsweise ausgestalteten Schneidevorrichtung individuell bearbeitet werden. Die Schneidekante kann seitlich und/oder frontal entlang von Kurven geführt werden. Die Schneidekante der Klinge kann z.B. wellenförmig nach vorn geführt und/oder entlang einer Linie oder Kurve in einer Ebene parallel zur Schneidekante geführt werden, um einen Schnitt in eine Schale einer Produkteinheit einzufügen. Beispielsweise kann auch ein Wippen der Klinge realisiert werden. Die Schneidebewegungen können auch kombiniert werden, sodass seitliche Bewegungen in Kombination mit Frontalbewegungen durchführbar sind. Produkteinheiten können daher peripher bearbeitet, aber auch teilweise oder vollständig durchtrennt und aufgeteilt werden. Ferner können Fehlpositionierung der Produkteinheiten gemessen und durch Verschiebung der Klinge kompensiert werden.

Besonders vorteilhaft gelingt die individuelle Bearbeitung der Produkteinheiten, wenn die Klinge und/oder die Förderelemente wahlweise Bewegungen ausführen können. Eine Schale kann daher auch aufgetrennt werden, indem die Klinge peripher in die Produkteinheit eingeführt und die Produkteinheit in der Folge durch Bewegung der Förderelemente gedreht wird. Vorzugsweise werden die Förderelemente um eine Achse drehbar gelagert, die zumindest annähernd senkrecht zu einer Schnittfläche verläuft, entlang der die Klinge bzw. die Schneidekante der Klinge verschiebbar ist.

Vorteilhaft können auch Proben aus den Produkteinheiten ausgeschnitten werden. Z.B. können Proben ausgeschnitten werden, die die Form eines Tortenstücks aufweisen. Dies gelingt besonders einfach, wenn drahtförmige Klingen verwendet werden.

In einer vorzugsweisen Ausgestaltung ist die wenigstens eine Klinge an einer Klingenhalterung befestigt, die mit einer von einem Gerüst gehaltenen Antriebsvorrichtung verbunden ist und mittels der Antriebsvorrichtung innerhalb des Arbeitsraums drehbar und/oder entlang einem Arbeitsweg führbar ist, der linear oder entlang einer Kurve verläuft.

Vorzugsweise umfasst die Antriebsvorrichtung mehrere Aktuatoren, die individuell steuerbar sind und die einerseits je über ein erstes Drehgelenk mit der Klingenhalterung und die andererseits je über ein zweites Drehgelenk derart mit dem Gerüst verbunden sind, dass die Klingenhalterung allein von den Aktuatoren gehalten ist.

Vorzugsweise weist die Klingenhalterung wenigstens zwei Klingen auf, die je einem Förderkanal und einem diesbezüglichen Arbeitsraum zugeordnet sind, und mittels denen über den zugeordneten Förderkanal zugeführte Produkteinheiten bearbeitet bzw. geschnitten oder angeschnitten und gegebenenfalls von einer Schale befreit werden können.

Durch entsprechende Ansteuerung der Aktuatoren gelingt es somit, die Klingen innerhalb des Arbeitsvolumens beliebig zu führen, auszurichten und zu positionieren. Mit den Klingen können somit parallel in Reihen zugeführte Produkteinheiten, z.B. Haselnüsse, vorteilhaft geschnitten, gegebenenfalls in Hälften aufgeteilt werden.

Die Klingen können mit beliebigen Amplituden z.B. im Bereich von 0.1 mm ― 5 cm und mit nahezu beliebigen Frequenzen von 0.1 Hz bis 1'000 Hz vor und zurück verschoben werden. Die Klingen können daher auch Vibrationsbewegungen unterworfen werden, sodass die Klingen leichter in die Produkteinheiten eindringen können.

Die Aktuator dienen daher nicht nur zur Bewegung der Klingen im Raum, sondern auch zur Beeinflussung des Schneidevorganges.

Durch entsprechende Wahl der Aktuatoren kann die Grösse des Arbeitsvolumens bzw. Arbeitsraums festgelegt werden. Vorzugsweise sind zylinderförmige Aktuatoren bzw. Linearantriebe vorgesehen, die eine axial verschiebbare Kolbenstange aufweisen. Durch die Wahl der Aktuatoren, insbesondere der Länge und der Ausrichtung der Kolbenstangen, können die ausführbaren Bewegungen und Drehungen der Klingen festgelegt werden. Beispielsweise kann vorgesehen werden, dass die Klingen in zwei oder drei Richtungen vor und zurück verschoben und um wenigstens eine Achse gedreht werden kann. Dabei können Klingen vorgesehen werden, die auf beiden Seiten eine Schneidekante aufweisen und die daher in beiden Bewegungsrichtungen einen Schnitt an einem ersten oder zweiten Prozessgut bzw. ersten und zweiten Produkteinheiten ausführen können. Die Wahl von Klingen mit zwei Schneiden verdoppelt die Arbeitsmöglichkeiten nicht nur in einer Ebene sondern innerhalb des gesamten Arbeitsraums.

Die Steuerung der Aktuatoren erfolgt mittels eines in einer Steuereinheit vorgesehenen Steuerprogramms. Vorzugsweise sind alle Aktuatoren individuell steuerbar. In Abhängigkeit der auszuführenden Bewegungen und Vibrationen können mehrere Aktuatoren auch identisch angesteuert werden. Sofern die Klingen lediglich parallel verschoben und in gleicher Ausrichtung gehalten werden sollen, so werden die Aktuatoren, die parallel zur Verschieberichtung ausgerichtet sind, identisch angesteuert. Durch eine ungleiche Ansteuerung der Aktuatoren können die Klingen gekippt oder gedreht werden.

Die an die Aktuatoren angeschlossenen Drehgelenke können identisch oder auch unterschiedlich ausgestaltet sein und werden entsprechend den Bewegungen gewählt, die von den Aktuatoren ausgeführt werden sollen. Die ersten Drehgelenke, die mit der Klingenhalterung verbunden sind, sind beispielsweise Kugelgelenke, Scharniergelenke, Gabelgelenke, Winkelgelenke oder zwei Gelenkfunktionen aufweisende Kombinationen davon. Die zweiten Drehgelenke, die mit dem Gerüst verbunden sind, sind vorzugsweise Kugelgelenke, Scharniergelenke, Gabelgelenke, Winkelgelenke oder zwei Gelenkfunktionen aufweisende Kombinationen dieser Gelenke.

Die Aktuatoren können elektrisch, hydraulisch oder pneumatisch angetrieben werden, wobei Kombinationen davon möglich sind. Besonders präzise können Kolbenstangen von elektrisch betriebenen Aktuatoren ausgefahren werden. Beispielsweise ist die Kolbenstange mit einer Spindel gekoppelt, die mittels eines Schrittmotors um eine Anzahl Drehungen gedreht wird, die dem erforderlichen Hub entspricht.

Die Klingenhalterung weist vorzugsweise zwei durch wenigstens eine Querstrebe miteinander verbundene Seitenplatten auf, an denen vorzugsweise die ersten Drehgelenke befestigt sind. An der Querstrebe sind die Energiewandler vorzugsweise paarweise mittels Montagevorrichtungen montiert sind.

In vorzugsweisen Ausgestaltungen sind Ultraschallgeneratoren durch Kopplungselemente mit den Klingen verbunden. Die Kopplungselemente, welche Energiewandler mit der Klinge verbinden, sind vorzugsweise bogenförmig ausgestaltet und auf der Frontseite oder Rückseite der Klinge mit dem Klingenrücken verbunden, vorzugsweise verschweisst.

Die optimale Bearbeitung der Produkteinheiten wird durch eine optimale Klingenführung und durch optimale Zufuhr und Präsentation der Produkteinheiten erreicht.

Zur ununterbrochenen Förderung der Produkteinheiten sind die ersten und zweiten Förderelemente vorzugsweise mit einem gemeinsamen Trum, einem Endlosband oder einer Endloskette, verbunden. Alternativ sind die ersten Förderelemente mit einem ersten Trum, einem Endlosband oder einer Endloskette, und die zweiten Förderelemente mit einem zweiten Trum, einem Endlosband oder einer Endloskette, verbunden. Die ersten und zweiten Förderelemente werden dabei vorzugsweise synchron bewegt. Zum Beladen oder Entladen der Produkteinheiten können jedoch auch asynchrone Bewegungen ausgeführt werden.

Die Produkteinheiten können daher von einer Spendevorrichtung oder Vereinzelungsvorrichtung vereinzelt an Paare von zueinander korrespondierenden Förderelementen abgegeben und in den Arbeitsbereich der zugehörigen Klinge gefördert werden. Dabei ist vorzugsweise eine Vielzahl von parallel zueinander angeordneten Förderkanälen vorgesehen, denen je eine Klinge zugeordnet ist. Die erfindungsgemässe Schneidevorrichtung ist daher beliebig skalierbar.

Da natürlich gewonnene Produkteinheiten sich in ihren Abmessungen und Formen oft deutlich voneinander unterscheiden, wird in den Ausnehmungen der ersten und/oder zweiten Förderelemente vorzugsweise je ein elastischer Insert angeordnet, der es erlaubt eine Produkteinheit, deren Abmessungen innerhalb eines Toleranzbereichs liegen, vorzugsweise spielfrei aufzunehmen. Produkteinheiten mit unterschiedlichen Abmessungen und Formen können daher sicher erfasst und präzise bearbeitet werden.

In einer besonders bevorzugten Ausgestaltung weisen die ersten Förderelemente und/oder die zweiten Förderelemente je eine Halterung auf, die mit der Ausnehmung und einem gegebenenfalls darin eingesetzten Insert versehen ist und die zwischen einer geöffneten Endposition und einer geschlossenen Endposition drehbar mit einer Trägerplatte verbunden ist, welche mit dem Trum verbunden ist. Zur Aufnahme einer Produkteinheit durch paarweise einander zugeordnete erste und zweite Förderelemente können deren Halterungen nach aussen gedreht werden. Zur Bearbeitung der erfassten Produkteinheiten werden die Halterungen der einander zugeordneten ersten und zweiten Förderelemente soweit gegeneinander gedreht, bis die normalerweise senkrecht ausgerichteten Halterungen den Arbeitsraum der Klinge begrenzen. Die Fronten der Halterungen bilden daher die einander zugewandten Seiten der ersten und zweiten Förderelemente, die den Arbeitsraum der Klinge begrenzen. Zwischen den Fronten der Halterungen liegt daher ein Teil der Produkteinheit, der mittels der Klinge bearbeitet, gegebenenfalls durchtrennt werden kann.

Das Öffnen und/oder Schliessen der Halterungen kann auf beliebige Weise, z.B. pneumatisch, magnetisch oder mechanisch z.B. mittels Federkraft erfolgen. Zum Öffnen und Schliessen der Halterungen können unterschiedliche Verfahren und Vorrichtungen vorgesehen werden.

Vorzugsweise sind die Halterung und die Trägerplatte durch eine Feder miteinander verbunden, mittels der die Halterung automatisch in die geöffnete Position gedreht wird. Die Schliessbewegung erfolgt durch eine Krafteinwirkung, die der Federkraft entgegenwirkt. Vorzugsweise wird die Halterung mit einem Führungselement, z.B. einer Führungsrolle, versehen. Ferner wird eine einteilige oder zweiteilige Kulisse vorgesehen, die wenigstens eine Führungsbahn aufweist, entlang der die Führungselemente führbar sind, um die zugehörige Halterung in die geschlossene Position zu drehen.

Besonders vorteilhaft gelingt die Bearbeitung der Produkteinheiten, wenn diese innerhalb der Förderelemente festgeklemmt und/oder festgesaugt werden. Z.B. können die geteilten Schalen in den Förderelementen festgehalten werden, während Produkteinheit z.B. durch Schwerkraft entfernt wird. In der Folge können die Schalen durch Unterbrechung der Saugwirkung oder durch Druckluft aus den Förderelementen entfernt werden. Die Halterung und/oder der Insert werden daher vorzugsweise mit einem Saugkanal versehen, der mit einer steuerbaren Saugvorrichtung verbunden oder verbindbar ist.

Der Bearbeitungsprozess der Produkteinheiten mittels der erfindungsgemässen Vorrichtung kann anhand weiterer Module, die von einer Steuereinheit gesteuert werden, optimiert werden. Dazu kann eine erste Messvorrichtung vorgesehen werden, mittels der die Position einer in die zueinander korrespondierenden Förderelemente eingesetzten Produkteinheit gemessen wird. Um die individuelle Bearbeitung dieser Produkteinheit zu optimieren kann der Bewegungsverlauf der Klinge in Abhängigkeit der Messung angepasst werden. Alternativ werden die Förderelemente verschoben.

Mittels einer zweiten Messvorrichtung können die bearbeiteten Produkteinheiten oder Teile davon z.B. nach dem Öffnen der Halterungen optisch geprüft werden und in Abhängigkeit des Prüfergebnisses an passender Stelle ausgestossen werden.

Nachfolgend wird die Erfindung anhand von Zeichnungen näher erläutert. Dabei zeigt:
- Fig. 1: die aus der WO2015150260A1 bekannte Vorrichtung 1', die der Bearbeitung wenigstens eines Prozessguts dient und die dazu wenigstens eine Klinge 11 aufweist, die von einer Klingenhalterung 2 gehalten ist, an die sieben gelenkig mit einem Gerüst 6 verbundene Aktuatoren 41, ..., 47 angekoppelt sind, mittels denen die Klinge 11 innerhalb eines Arbeitsvolumens nahezu beliebige Bewegungen ausführen kann, um das Prozessgut zu bearbeiten, insbesondere zu schneiden oder zu zerstäuben;
- Fig. 2a: eine symbolisch gezeigte Antriebsvorrichtung 4 sowie die Klingenhalterung 2 von Fig. 1, die zwei Seitenplatten 21A, 21B aufweist, an die Kolbenstangen 411, ..., 471 der Aktuatoren 41, ..., 47 über erste Drehgelenke 31, ..., 37 angekoppelt sind und die durch Querstreben 22 miteinander verbunden sind, welche acht Energiewandler 13 halten, die über Kopplungselemente 12 mit einer einstückigen Klinge 11 verbunden sind;
- Fig. 2b: die Klingenhalterung 2 von Fig. 2a von der Rückseite;
- Fig. 3: eine erfindungsgemässe Vorrichtung 1 mit einer Klingenhalterung 2, von der 32 Klingen 11 gehalten sind, von denen jeweils acht Stück in einem Montagerahmen 110A, 110B eingespannt sind;
- Fig. 4: die Klingenhalterung 2 von Fig. 3 mit vier Montagerahmen 110A, 110B, in denen je acht Klingen 11 eingespannt sind;
- Fig. 5: den Montagerahmen 110A von Fig. 4 mit Spannvorrichtungen 9, 91, 92, mittels denen die Klingen 11 eingespannt sind;
- Fig. 6a: den Montagerahmen 110A von Fig. 4 angekoppelt an eine erfindungsgemässe Fördervorrichtung 5 die acht Förderkanäle 51A, 51B, aufweist, denen je eine Klinge 11 zugeordnet ist;
- Fig. 6b: einen Teil des ersten Förderkanals 51 von Fig. 6a im Bereich des Eingriffs der zugehörigen Klinge 11;
- Fig. 7a: in vorzugsweisen Ausgestaltungen eine Klingenhalterung mit einem Montagerahmen 110, welcher eine drahtförmige Klinge 11 hält, sowie einen Förderkanal 51A einer Fördervorrichtung 5, die erste und zweite Förderelemente 511A, 511B, ..., aufweist, die seitlich gegeneinander drehbar sind, um eine Produkteinheit aufzunehmen und einzuschliessen;
- Fig. 7b: zueinander korrespondierende Förderelemente 511A, 511B von Fig. 7a, die eine Produkteinheit (nicht sichtbar) einschliessen und einen Arbeitsraum 500 begrenzen, in den die drahtförmige Klinge 11 eingeführt wurde;
- Fig. 7c: die Fördervorrichtung 5 von Fig. 7a mit ersten und zweiten Förderelementen 541A, 541B, die mittels Motoren 510A, 510B drehbar sind und mit einer Messvorrichtung 1111 und einer Verschiebevorrichtung 561;
- Fig. 7d: die Förderelemente 541A, 541B von Fig. 7c mit einer Produkteinheit 8, die mittels einer drahtförmigen Klinge 11 und einem Keil 71 von einer Schale 880 befreit wird;
- Fig. 8a: eine erfindungsgemässe Schneidevorrichtung 1 mit einer vorzugsweise ausgestalteten Fördervorrichtung 5 und einer Steuereinheit 1002;
- Fig. 8b: die Schneidevorrichtung 1 und die Fördervorrichtung 5 von Fig. 8a mit einer Spendevorrichtung 52, einer ersten und zweiten Aufnahmevorrichtung 521, 522, einer ersten und zweiten Messvorrichtung 1111, 1112 sowie einer Saugvorrichtung 1113, die vorzugsweise alle über Steuerleitungen und/oder Datenleitungen mit der Steuereinheit 1002 verbunden sind;
- Fig. 8c: die Fördervorrichtung 5 von Fig. 8b, die eine zweiteilige Kulisse 590 aufweist, mittels der die Förderelemente 511A, 511B bzw. die darauf vorgesehenen Halterungen drehbar sind, um Produkteinheiten 8 aufnehmen und nach der Bearbeitung wieder abgeben zu können;
- Fig. 8d: das erste Förderelement 511A und in Schnittdarstellung das zweite Förderelement 511B von Fig. 8a, je mit einer Halterung 518, die drehbar mit einer Trägerplatte 585A, 585B verbunden ist; und
- Fig. 8e: das erste Förderelement 511A von Fig. 8d in Explosionsdarstellung.

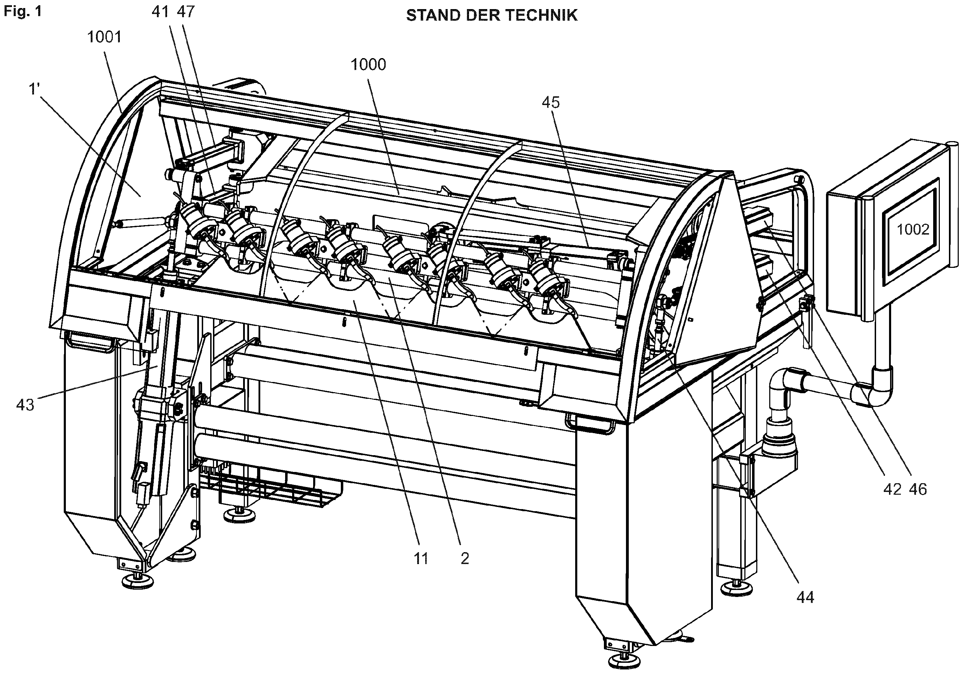

Fig. 1 zeigt die aus der WO2015150260A1 bekannte Vorrichtung 1', die der Bearbeitung wenigstens eines Prozessguts dient, welche der Vorrichtung 1 beispielsweise auf verschiedenen Ebenen und aus verschiedenen Richtungen zugeführt werden. Die Vorrichtung 1 umfasst wenigstens eine mit Ultraschallenergie beaufschlagbare Klinge 11, die von einer Klingenhalterung 2 gehalten ist. Die Klingenhalterung 2 ist in dieser Ausgestaltung gelenkig mit sieben Aktuatoren 41, ..., 47 gekoppelt, die zudem gelenkig mit einem Gerüst 2 verbunden und von diesem gehalten sind. Die Aktuatoren 41, ..., 47 sind vorzugsweise Linearantriebe mit einer Kolbenstange, die von einem Elektromotor angetrieben werden und schrittweise ausgefahren und zurückgefahren werden kann. Mittels der Kolbenstangen kann die Klinge 11 daher innerhalb eines Arbeitsvolumens nahezu beliebige Bewegungen ausführen, um das Prozessgut zu bearbeiten, insbesondere zu schneiden oder zu zerstäuben. Die Bewegungsabläufe, die programmierbar sind und von einer Steuereinheit 7 gesteuert werden, sind von der Anzahl der eingesetzten Aktuatoren abhängig, deren Steuerung entsprechend koordiniert wird. Die Steuereinheit 7, die von einem Schwenkarm gehalten ist, weist vorzugsweise einen Bildschirm bzw. Touchscreen auf, über den Kommandos eingegeben werden können, um vorprogrammierte Bewegungsabläufe auszuwählen oder neue Bewegungsabläufe der Klinge 11 festzulegen.

Die Programmierung der Vorrichtung kann auf verschiedene Arten erfolgen. Beispielsweise kann die Klinge 11 entlang einer gewünschten Schnittfläche geführt werden, wobei die Bewegungsverläufe der Kolbenstangen gemessen und registriert werden. Weiterhin können Kurvenflächen in einem geometrischen Raum definiert werden, wonach die Positionen der ersten Kugelgelenke ermittelt und der Verlauf der Abstände zwischen den zueinander korrespondierenden ersten und zweiten Kugelgelenke ermittelt werden. Die Aktuatoren 41, ..., 47, insbesondere der siebte Aktuator 47, welcher die Klinge axial verschieben kann, kann auch oszillierende Bewegungen ausführen.

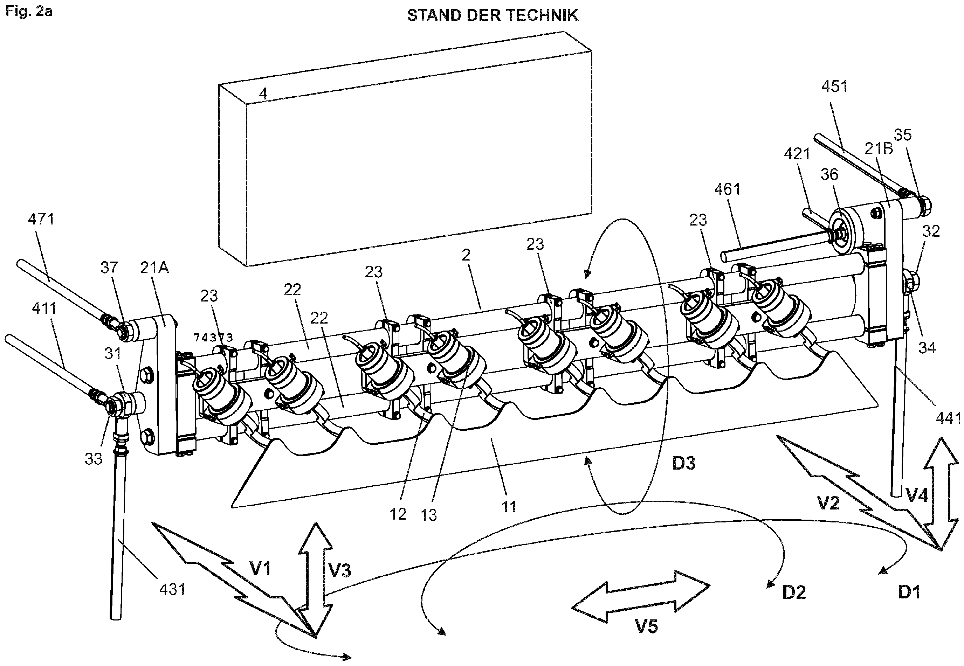

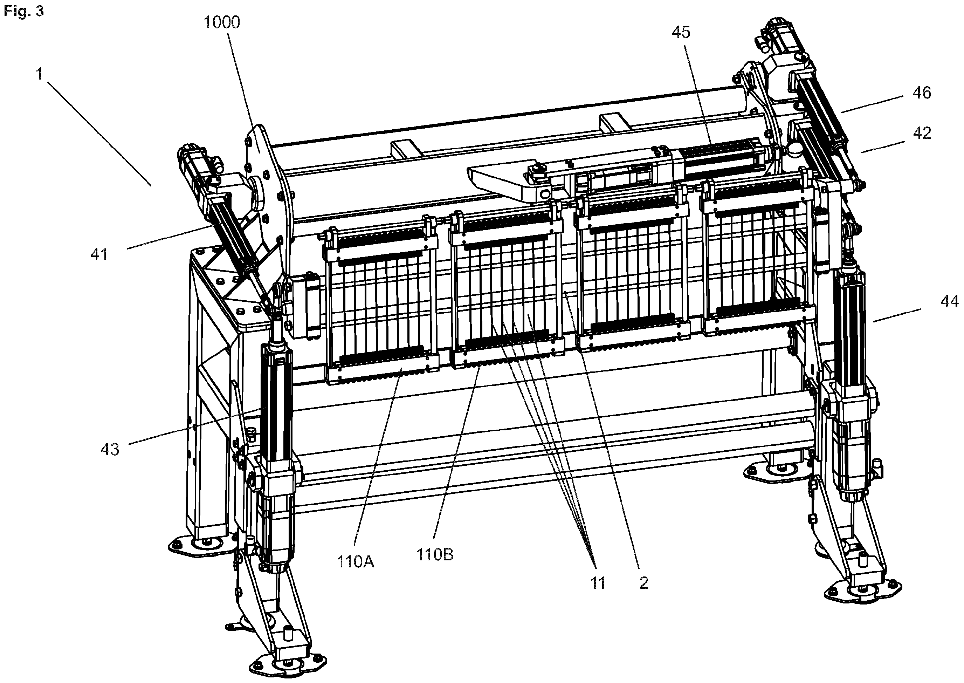

Aus Fig. 1 ist ersichtlich, dass die Vorrichtung 1 eine relativ lange einteilige (siehe Fig. 2a) oder mehrteilige (siehe Fig. 3a) Klinge 11 aufweist, die innerhalb eines relativ grossen Arbeitsvolumens bewegt werden kann, welches durch die Länge der Kolbenstangen der Aktuatoren 41, ..., 47 bestimmt ist. Vorzugsweise wird eine einstückige Klinge 11 verwendet. Trotz der grossen Abmessungen der Klinge 11 und des grossen Arbeitsvolumens sowie der vielfältigen Einsetzbarkeit, gegebenenfalls mit Bearbeitung mehrerer Prozessgüter, erlaubt die Erfindung den Aufbau der Vorrichtung 1 mit räumlichen Abmessungen, die im Wesentlichen von der Grösse der Klinge 11 bestimmt werden. Die säulenartigen Aktuatoren 41, ..., 47 können parallel zu Elementen des Gerüsts oder Gestells 6 angeordnet werden und vergrössern dessen Abmessungen nur unwesentlich.

Die Vorrichtung 1 umfasst ferner Schutzabdeckungen und eine Haube 65, die zurückgeschoben und nach oben geklappt werden kann.

Fig. 2a zeigt symbolisch eine aus den Aktuatoren 41, ..., 47 bestehende Antriebsvorrichtung 4 sowie die Klingenhalterung 2 von Fig. 1 mit einer einstückigen Klinge 11. Die Klingenhalterung 2 umfasst zwei Seitenplatten 21A, 21B, an die Kolbenstangen 411, ..., 471 der Aktuatoren 41, ..., 47 über erste Drehgelenke 31, ..., 37 angekoppelt sind. Die Seitenplatten 21A, 21B sind durch zwei Querstreben 22 miteinander verbunden, an denen acht Energiewandler 13 paarweise mittels vier Montagevorrichtungen 23 montiert sind. Die Energiewandler 13 sind über Kopplungselemente 12 mit der einstückigen Klinge 11 verbunden. Die Kopplungselemente 12 weisen je einen halbkreisförmigen Bogen auf, welcher senkrecht auf dem Klingenrücken der Klinge 11 steht und mit diesem verschweisst ist. Die Kopplungselemente 12 sind in einem gleichmässigen Raster angeordnet, wodurch sichergestellt wird, dass die von einem Ultraschallgenerator an die Energiewandler 13 abgegebene Ultraschallenergie gleichmässig in die Klinge 11 eingekoppelt wird. Die Klinge 11 wird somit von acht Kopplungselementen 12 gehalten, über die gleichzeitig die Ultraschallenergie eingespeist wird.

Um die Klinge 11 und die Klingenhalterung 2 besser darstellen zu können, wurden die Aktuatoren 41, ..., 47 symbolisch in einem Block bzw. der Antriebsvorrichtung 4 zusammen gefasst. Gezeigt sind lediglich die Kolbenstangen 411, ..., 471 der Aktuatoren 41, ..., 47, die über die ersten Drehgelenke 31, ..., 37 an die Seitenplatten 21A, 21B der Klingenhalterung 2 angekoppelt sind. Die ersten Drehgelenke 31, ..., 37 sind vorzugsweise Kugelgelenke, weshalb die Kolbenstangen 411, ..., 471 innerhalb eines Öffnungswinkels drehbar sind. Bei maximaler Auslenkung und Drehung der Kolbenstangen 411, ..., 471 um den zugehörigen Öffnungswinkel verlaufen die Kolbenstangen 411, ..., 471 entlang der Mantelfläche eines Kegels. Der Öffnungswinkel kann dabei sehr gross gewählt werden und sektoriell 180° sogar übersteigen. Einzelne der Kolbenstangen 411, ..., 471 können bei bestimmten Bewegungen der Klinge 11 unterschiedlich grosse Winkelbereiche durchlaufen. Für einzelne der Drehgelenke 31, ..., 37 können zudem unterschiedlich grosse Öffnungswinkel vorgesehen werden. Wesentlich ist, dass die Klinge 11 innerhalb des gewünschten Arbeitsvolumens bewegt und auch im erforderlichen Masse gedreht werden kann. Fig. 2a zeigt ferner, dass einzelne der ersten Gelenke 31 und 33 bzw. 32 und 34 auch unmittelbar nebeneinander angeordnet werden können, so dass die zugehörigen Aktuatoren 41, 43 bzw. 42, 44 praktisch an identischen Punkten an die Klingenhalterung 2 angekoppelt sind.

In Fig. 2a sind die Grundbewegungen, die Verschiebungen V1, V2, V3, V4, V5 und die Drehungen D1, D2, D3 eingezeichnet, welche die Klinge 11 individuell oder in Kombination durchführen kann.

Mittels der ersten und der zweiten Kolbenstange 411, 421, die parallel zueinander horizontal ausgerichtet und je auf einer Seite der Klingenhalterung 2 angekoppelt sind, können die linke Seite und die rechte Seite der Klinge 11 unabhängig voneinander oder in Kombination gleich (V1 = V2) oder ungleich (V1 ≠ V2), gegebenenfalls gegensinnig, vor und zurück verschoben werden. Durch eine unterschiedliche Bewegung der Kolbenstangen 411, 421 resultiert ferner die Drehbewegung D1.

Mittels der dritten und der vierten Kolbenstange 431, 441, die parallel zueinander vertikal ausgerichtet und je auf einer Seite der Klingenhalterung 2 (an denselben Stellen wie die erste und die zweite Kolbenstange 411, 421) angekoppelt sind, können die linke Seite und die rechte Seite der Klinge 11 unabhängig voneinander oder in Kombination gleich (V3 = V4) oder ungleich (V3 ≠ V4), gegebenenfalls gegensinnig, nach unten und nach oben verschoben werden, wodurch die Drehbewegung D2 resultiert.

Damit die Klinge 11 bei der Betätigung der ersten beiden Aktuatoren 41, 42 nicht gedreht wird, ist vorzugsweise ein fünfter Aktuator 45 vorgesehen, der parallel zum ersten und zum zweiten Aktuator 41, 42 ausgerichtet und über ein korrespondierendes der ersten Drehgelenke 35 exzentrisch mit der Klingenhalterung 2 verbunden ist. Sofern der fünfte Aktuator 45 identisch angesteuert wird wie der erste und der zweite Aktuator 41, 42, so erfolgt eine Parallelverschiebung der Klinge 11 nach vorn oder zurück. Sofern der fünfte Aktuator 45 unterschiedlich angesteuert wird erfolgt eine Drehung D3 um eine Achse, die durch die Ankopplungspunkte der ersten beiden Aktuatoren 41, 42 definiert ist. Durch die Drehung D3 der Klinge 11 kann ein Schnitt ausgeführt werden. Alternativ kann die Klinge 11 waagerecht ausgerichtet und stabil gehalten werden, so dass ein pulverförmiges Prozessgut darauf aufgesetzt werden kann, welches anschliessend unter Einwirkung von Ultraschallenergie zerstäubt wird.

Durch Betätigung der sechsten Kolbenstange 461, die nahezu parallel zur Klinge 11 ausgerichtet ist, kann eine seitliche Verschiebung der Klinge 11 beispielsweise entlang deren Längsachse vollzogen werden (V5). Dadurch kann ein vertikaler Schnitt in Kombination mit einem horizontalen Schnitt durchgeführt werden, wodurch auch schwierigstes Prozessgut präzise geschnitten werden kann. Der vertikalen Bewegung kann auch eine lateral verlaufende Schwingung überlagert werden, welche den Schneidevorgang erleichtert.

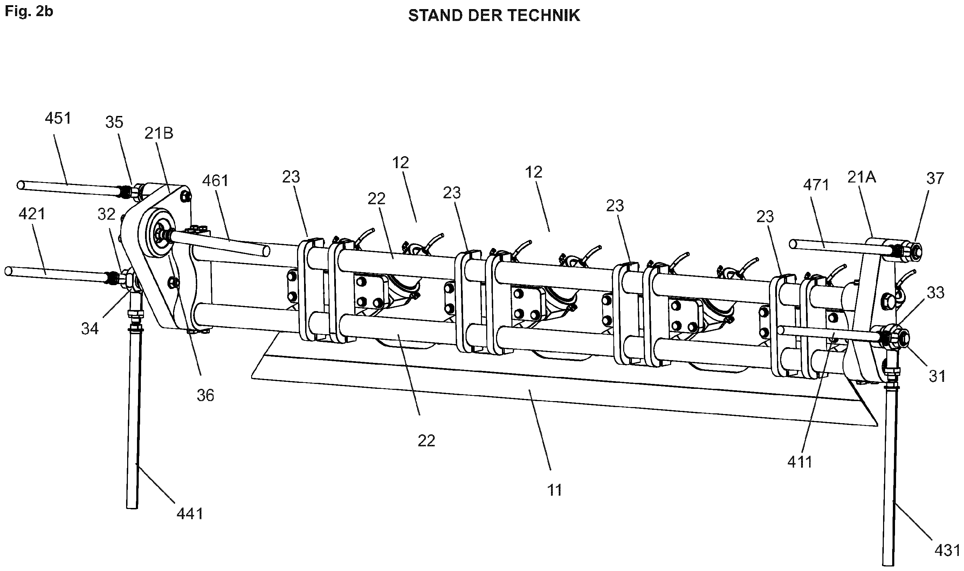

Fig. 2b zeigt die Klingenhalterung 2 mit den beiden Seitenplatten 21A, 21B sowie den beiden Querstreben 22 und den vier damit verbundenen Montagevorrichtungen 23 von Fig. 2a, mittels denen die Energiewandler 12 und die damit verbundene Klinge 11 gehalten werden, von der Rückseite.

Fig. 3 zeigt eine erfindungsgemässe Vorrichtung 1 ohne Fördervorrichtung 5, mit einer Klingenhalterung 2, von der 32 Klingen 11 gehalten sind. Jeweils acht Klingen 11 sind je in einem Montagerahmen 110A, 110B eingespannt. Die Klingen 11 sind derart gehalten und ausgerichtet, dass sie mit den nachstehend beschriebenen Fördervorrichtungen 5 interagieren können.

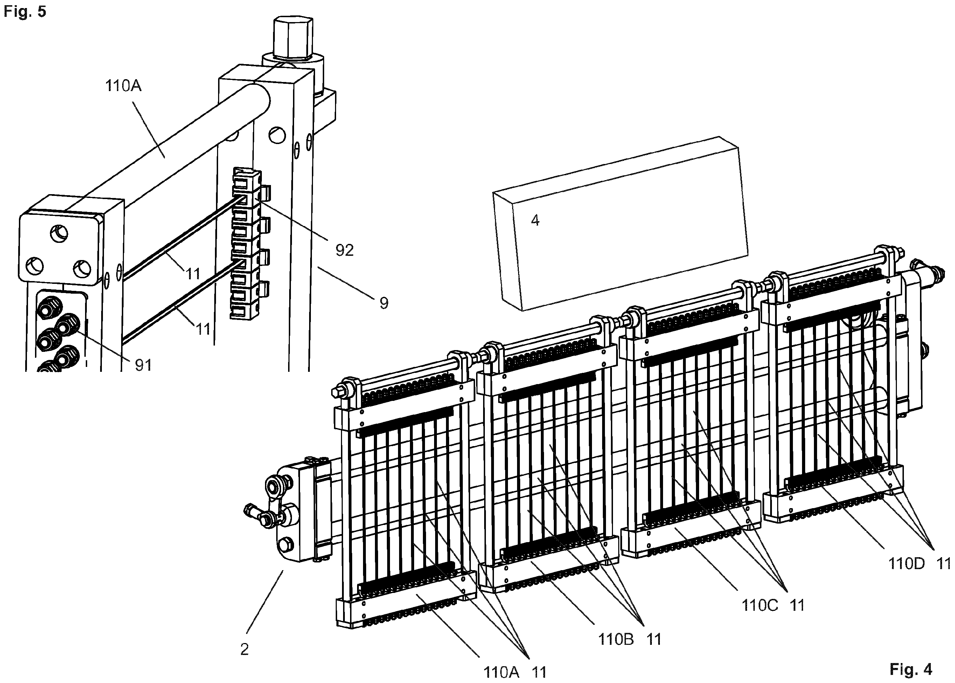

Fig. 4 zeigt die Klingenhalterung 2 von Fig. 3 mit vier Montagerahmen 110A, 110B, 110C, 110D in denen je acht Klingen 11 eingespannt sind. Die Antriebsvorrichtung 4 mit den Aktuatoren ist symbolisch gezeigt. Die Klingenhalterung 2 mit den vier Montagerahmen 110A, 110B, 110C, 110D kann auf die Vorrichtung von Fig. 1 aufgesetzt werden und in der Folge in gleicher Weise gesteuert werden, wie dies oben beschrieben wurde.

Die Klingen 11 können im Raum bewegt und mit Amplituden z.B. im Bereich von 0.1 mm ― 5 cm und mit Frequenzen von 0.1 Hz bis 1'000 Hz vor und zurück verschoben werden, um beliebige Schnittbewegungen auszuführen und den Schnittvorgang gleichzeitig beliebig zu beeinflussen. Viele Rationen können den Bewegungen der Klingen 11 beliebig überlagert werden.

Fig. 5 zeigt den Montagerahmen 110A von Fig. 4 mit Spannvorrichtungen 9, 91, 92, mittels denen die Klingen 11 eingespannt sind. Die Klingen 11 sind z.B. mit Zugstäben und Schraubenmutter 91, 92 verbunden. In vorzugsweisen Ausgestaltungen wird Ultraschallenergie in die Klingen 11 eingespeist, um den Schneidvorgang weiter zu erleichtern. Mit Ultraschallgeneratoren verbundene Kopplungselemente können direkt mit den Klingen 11 oder den Spannvorrichtungen 9 oder Elementen davon 91, 92, z.B. den Zugstäben, verbunden werden, um die Ultraschallenergie ein zu koppeln.

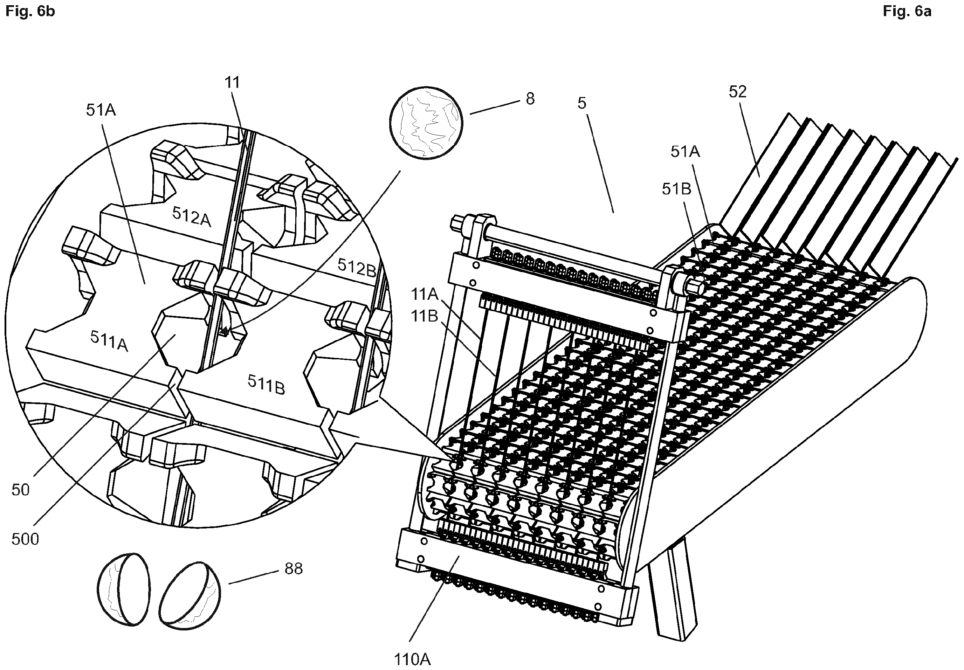

Fig. 6a zeigt den Montagerahmen 110A von Fig. 4 angekoppelt an eine erfindungsgemässe Fördervorrichtung 5, die acht Förderkanäle 51A, 51B, aufweist, denen je eine Klinge 11 zugeordnet ist. Jedem der Förderkanäle 51A, 51B werden von einer Vereinzelungsvorrichtung 52 seriell Produkteinheiten 8, z.B. Haselnüsse, zugeführt.

Der Montagerahmen 110A kann mittels der Antriebsvorrichtung 4 an die Fördervorrichtung 5 angekoppelt werden und beim Betrieb die gegebenenfalls erforderlichen Schneidbewegungen ausführen.

Fig. 6b zeigt einen Blick auf den ersten Förderkanal 51 im Bereich des Eingriffs der zugehörigen Klinge 11. Es ist gezeigt, dass die Förderkanäle 51A; 51B Aufnahmeöffnungen 50 aufweisen, die der Aufnahme der Produkteinheiten 8, wie kugelförmigen Nüssen dienen.

In dieser Ausgestaltung sind die Förderkanäle 51A; 51B zweiteilig ausgebildet, sodass die Klingen 11A, 11B, ... zumindest teilweise in die Förderkanäle 51A; 51B einführbar ist.

Die Förderkanäle sind gliederförmig ausgebildet und weisen Förderelemente 511, 512 oder Paare von Förderelementen 511A, 511B; 512A, 512B aufweisen, die vorzugsweise je eine Aufnahmeöffnung 50 einschliessen oder begrenzen. Die Klinge 11 kann daher zwischen Paare von Förderelementen 511A, 511B; 512A, 512B eingeführt werden, um die Produkteinheiten 8 zu schneiden.

Die Förderelemente 511, 512; 511A, 511B; 512A, 512B) können seriell entlang von Führungselementen geführt und/oder miteinander verkettet sein, z.B. in der Art der Elemente einer Rolltreppe.

Vorzugsweise sind die Förderkanäle 51A; 51B mit den Aufnahmeöffnungen 50 und die Klingen 11A, 11B, ... derart angeordnet und relativ zueinander verschiebbar, dass die den Aufnahmeöffnung in 50 gelagerten und vereinzelten Produkteinheiten 8 in zwei Hälften 88 aufgeschnitten werden können.

Zur Inspektion des bearbeiteten Prozessguts 88 wird vorzugsweise eine Vorrichtung zur optischen Prüfung vorgesehen.

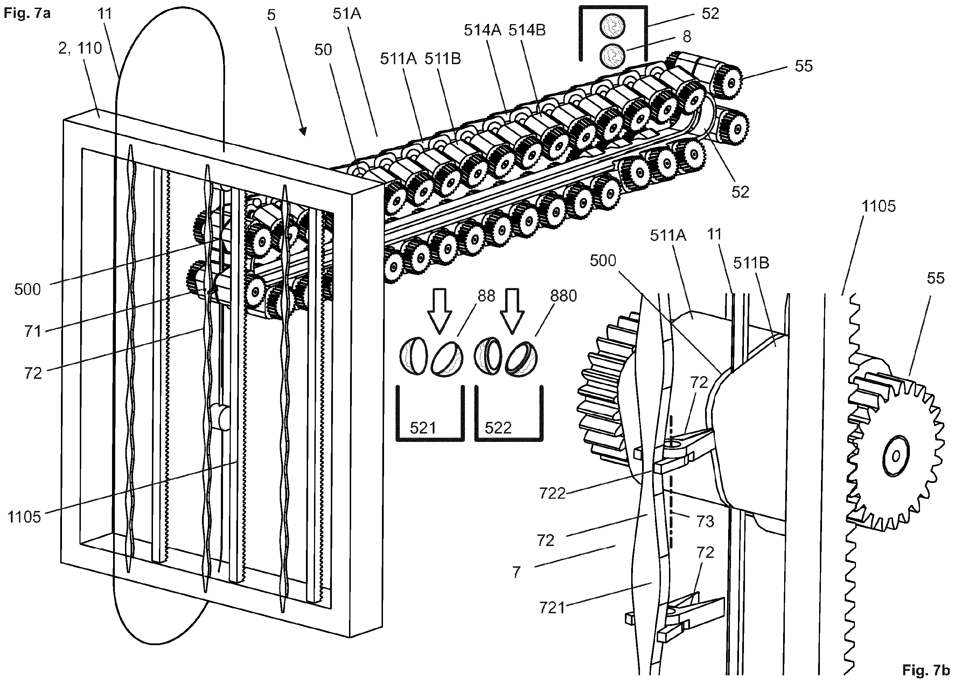

Fig. 7a zeigt in vorzugsweisen Ausgestaltungen eine Klingenhalterung mit einem Montagerahmen 110, welcher eine drahtförmige Klinge 11 hält, sowie einen Förderkanal 51A einer Fördervorrichtung 5 mit ersten und zweiten Förderelementen 511A, 511B, die je auf einem Trum 583 angeordnet sind und zyklisch entlang einer in sich geschlossenen Bahn geführt werden. Die Förderelemente 511A, 511B sind seitlich gegeneinander drehbar, um eine Produkteinheit 8 aufzunehmen und nach der Bearbeitung wieder abzugeben. Von einer Vereinzelungsvorrichtung 52 werden vereinzelte Produkteinheiten 8 jeweils an ein Paar von Förderelementen 511A, 511B abgegeben. Bearbeitete Produkteinheiten 88 werden einer ersten Aufnahmevorrichtung 521 zugeführt. Aufgetrennte Schalen 880 werden an eine zweite Aufnahmevorrichtung 522 abgegeben.

In dieser vorzugsweisen Ausgestaltung befinden sich jeweils zwei Paare von Förderelementen 511A, 511B; 512A, 512B im Arbeitsbereich bzw. Arbeitsraum 500 der Klinge 11 und eines Trennwerkzeugs 71, sodass z.B. in einem ersten Schritt die Schale 880 der Produkteinheit 8 mittels der Klinge 11 angeschnitten und mittels des Trennwerkzeugs 71 aufgebrochen und in einem zweiten Schritt der freigelegte Kern mittels der Klinge 11 in zwei Hälften 88 aufgeteilt werden kann. Ferner sind Zahnstangen 1105 gezeigt, die in Zahnräder 55, die mit den Förderelementen 511A, 511B gekoppelt sind, eingreifen können, um die Förderelemente 511A, 511B, oder Teile davon, zu drehen. Wenn der Rahmen 110 nach unten gezogen wird, wird die in den Förderelementen 511A, 511B eingeschlossene Produkteinheit 8 daher um eine Achse senkrecht zur Schnittebene gedreht, sodass die Produkteinheit 8 peripher z.B. entlang einer Kreislinie aufgeschnitten werden kann. Durch das Trennwerkzeug 71, z.B. einen Keil oder eine Schere, können angeschnittene Schalenteile anschliessend leicht voneinander getrennt werden. Zur Betätigung des fest montierten Trennwerkzeugs 71 ist eine wellenförmige Funktionsstange 72 vorgesehen, die Wellenbäuche 721 und Wellenknoten 722 aufweist (siehe Fig. 7b). Nach der Auftrennung der Schalenteile 880 kann der Kern der Produkteinheit 8 ganz oder teilweise geschnitten werden.

Fig. 7b zeigt ein Paar von zueinander korrespondierenden Förderelementen 511A, 511B von Fig. 7a, die eine Produkteinheit (nicht sichtbar) einschliessen und einen Arbeitsraum 500 begrenzen, in den die drahtförmige Klinge 11 eingeführt wurde. Das mittels einer Werkzeugwelle 73 (strichpunktierte Linie) gehaltene zweiteilige Trennwerkzeug 71 wird mittels der wellenförmigen Funktionsstange 72 betätigt, die bei einer vertikalen Bewegung die vorzugsweise mittels einer Feder gespannten Teile des Trennwerkzeugs 71 um die Werkzeugwelle 73 auseinander dreht.

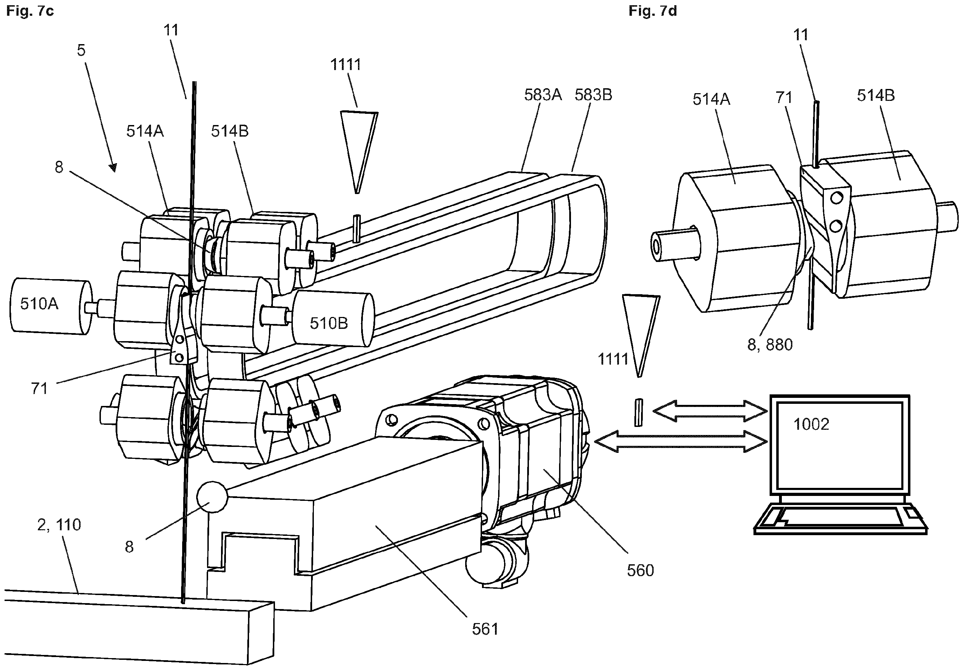

Fig. 7c zeigt die Fördervorrichtung 5 von Fig. 7a in einer weiteren vorzugsweisen Ausgestaltung mit ersten und zweiten Förderelementen 541A, 541B, die mittels Motoren 510A, 510B drehbar sind. Auf eine Zahnstange und Zahnräder kann in dieser Ausgestaltung verzichtet werden. Ferner ist eine erste Messvorrichtung 1111, z.B. eine Laser-Messvorrichtung, schematisch gezeigt, mittels der die Position jeder Produkteinheit 8 in den Förderelementen 541A, 541B vermessen werden kann. Zur Kompensation von Fehlpositionierung ist eine von einem Motor 560 angetriebene Verschiebevorrichtung 561 vorgesehen, mittels der die Fördervorrichtung 5 verschiebbar, um die Fehlpositionierung zu kompensieren. Alternativ können Fehlpositionierungen durch eine Verschiebung der Klinge 11 kompensiert werden. Es ist weiter gezeigt, dass Messsignale von der ersten Messvorrichtung 1111 zur Steuereinheit 1002 übertragen und dort verarbeitet werden. In der Folge wird der Motor 560 oder die Antriebsvorrichtung 4 angesteuert, um die Fehlpositionierung zu kompensieren.

Fig. 7d zeigt die drehbaren Förderelemente 541A, 541B von Fig. 7c mit einer Produkteinheit 8, die mittels einer drahtförmigen Klinge 11 und einem Keil 71 von einer Schale 880 befreit wird.

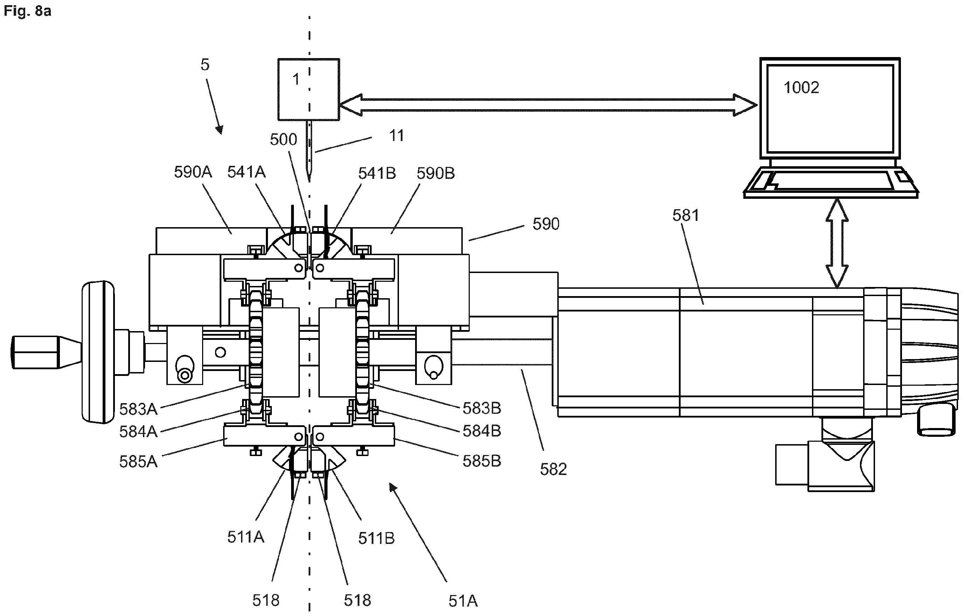

Fig. 8a zeigt eine erfindungsgemässe Schneidevorrichtung 1 mit einer vorzugsweise ausgestalteten Fördervorrichtung 5 und einer Steuereinheit 1002. Die Fördervorrichtung 5 umfasst einen Förderkanal 51A mit ersten und zweiten Förderelementen 511A, 511B; ...; 541A, 541B, die auf ersten und zweiten Trägerplatten 585A, 585B montiert sind. Die Trägerplatten 585A, 585B sind je mit einem Trum bzw. einer ersten und einer zweiten Endloskette 584A, 584B verbunden, die von einem Motor 581 über eine Antriebswelle 582 und Zahnräder 383A, 583B angetrieben sind. Die Förderelemente 511A, 511B; ...; 541A, 541B sind je mit einer drehbar gelagerten Halterung 518 versehen, die entlang des Förderweges mittels einer Kulisse 590, die zwei Teile 590A, 590B aufweist, gegeneinander gedreht und verschlossen werden, um die aufgenommenen Produkteinheit beidseits zu halten. Die eingeschlossene Produkteinheit wird in der Folge mit der Klinge 11 der Schneidevorrichtung 1 bearbeitet.

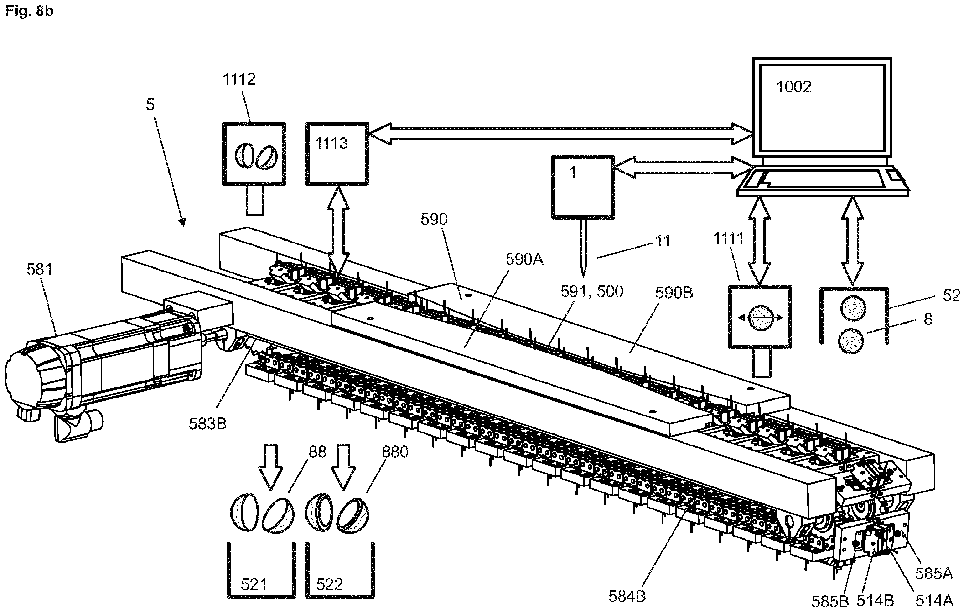

Fig. 8b zeigt die Schneidevorrichtung 1 und die Fördervorrichtung 5 von Fig. 8a mit verschiedenen Funktionseinheiten. Zur Abgabe der Produkteinheiten 8 ist eine Vereinzelungsvorrichtung oder Spendevorrichtung 52 vorgesehen. Zur Aufnahme der aufgeteilten Produkteinheiten 88 ist eine erste Aufnahmevorrichtung 521 vorgesehen. Eine zweite Aufnahmevorrichtung 522 ist zur Aufnahme der abgetrennten Schalen 880 vorgesehen. Mittels einer ersten Messvorrichtung 1111 ist die Position der von den Förderelementen 511A, 511B; ...; 541A, 541B gehaltenen Produkteinheiten 8 messbar. Mittels einer zweiten Messvorrichtung 1112 können die bearbeiteten Produkteinheiten optisch erfasst, geprüft und durch Steuerung der Fördervorrichtung 5 entsprechend abgelegt werden. Ferner ist eine Saugvorrichtung 1113 vorgesehen, mittels der die Produkteinheiten 8 oder Teile davon in den Förderelementen 511A, 511B; ...; 541A, 541B gehalten oder an einem Abgabeort z.B. bei den Aufnahmevorrichtungen 521, 522 ausgestossen werden können. Die genannten Module sind zu diesem Zweck vorzugsweise über Datenleitungen und Steuerleitungen mit der Steuereinheit 1002 verbunden.

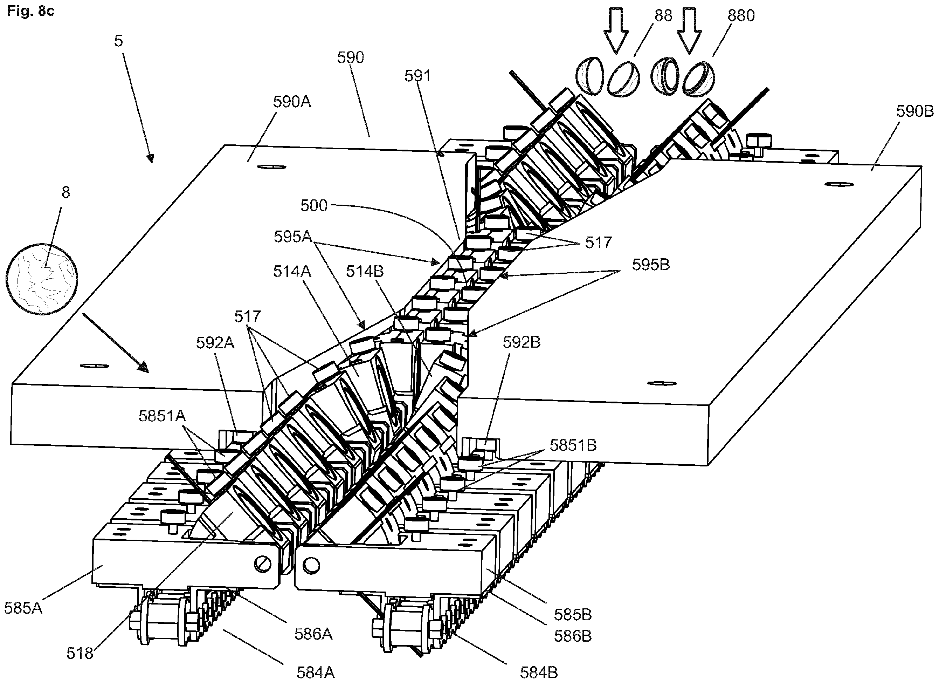

Fig. 8c zeigt die Fördervorrichtung 5 von Fig. 8b mit einer Kulisse 590, die zwei einander gegenüberliegende Kulissenteile 590A, 590B aufweist, die miteinander gegenüberliegenden Führungsbahnen 595A; 595B einen Kulissenkanal 591 begrenzen. Die Förderelemente 511A, 511B umfassen drehbar gelagerte Halterungen 518, die an der Oberseite mit einem Führungselement bzw. einer Führungsrolle 517 versehen sind. Bei der Einfahrt in den Kulissenkanal 591 werden die Führungsrollen 517 entlang der zugehörigen Führungsbahn 595A; 595B geführt, wodurch die Halterungen 518 gegeneinander gedreht und senkrecht ausgerichtet in der Mitte der Kulisse 590 verschlossen werden, wie dies gezeigt ist. In der Mitte der Kulisse 95 begrenzen die Halterungen 518 den Arbeitsraum 500 der Klinge 11, die zwischen die Halterungen 518 eingeführt werden kann, um die fixierten Produkteinheiten 8 zu bearbeiten. Die Trägerplatten 585A, 585B sind ebenfalls mit Führungsrollen 5851A, 5851B versehen, die an der Unterseite der Kulissenteile 590A, 590B in Führungskanälen 592A, 592B geführt sind. Die Produkteinheiten 8 werden daher präzise gefördert und gehalten und können auch präzise bearbeitet werden. An der Ausgangsseite der Kulisse 95 werden die Halterungen 518 wieder geöffnet, sodass die bearbeiteten Produkteinheiten 88 oder Teile 880 davon entnommen werden können.

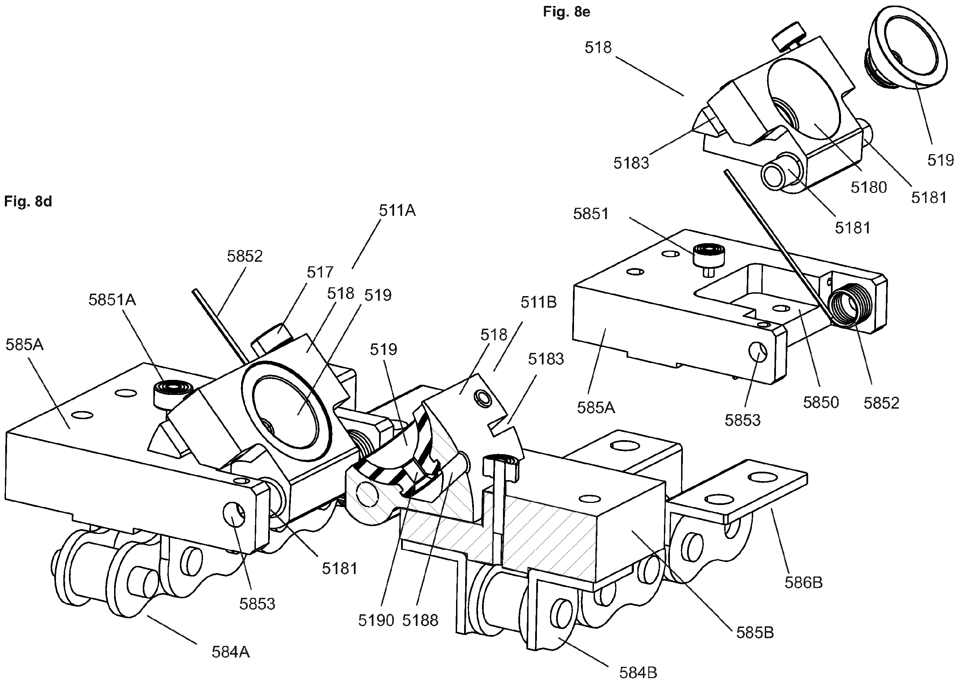

Fig. 8d zeigt das erste Förderelement 511A und in Schnittdarstellung das zweite Förderelement 511B von Fig. 8a, je mit einer Halterung 518, die drehbar mit einer Trägerplatte 585A, 585B verbunden ist. Dazu weist jede der Halterungen beidseitig einen Gelenkschaft 5181 auf, die in Flanschöffnungen 5853 der Trägerplatte 585A bzw. 585B drehbar gehalten sind. Ein Gelenkschaft 5181 ist von einer Feder umschlossen, die mit einem Ende an der Trägerplatte 585A, 585B anliegt und mit dem anderen Ende in einer Ausnehmung 5183 der Halterung 518 gehalten ist und diese nach aussen gegen die Trägerplatte 585A, 585B dreht. Sofern die Halterungen 518 nicht im Eingriff mit der Kulisse 590 stehen, sind sie auseinandergedreht und zur Aufnahme einer Produkteinheit 8 bereit. Dazu ist jede der Halterungen 518 mit einer Ausnehmung 5180 versehen, in die vorzugsweise ein Insert 519 eingesetzt ist. Der Insert 519 ist vorzugsweise in der Form einer dickwandigen Lautsprechermembrane ausgebildet. Alternativ können auch elastische Segmente in die Ausnehmung eingesetzt werden. Der elastische und komprimierbare Insert 519 erlaubt es, Unterschiede in den Abmessungen der Produkteinheit den 8 zu kompensieren. Somit können Produkteinheiten 8, deren Abmessungen in einem relativ grossen Toleranzbereich variieren von den Förderelementen 511A, 511B; ...; 541A, 541B erfasst und vorzugsweise spielfrei gehalten werden. Der Insert 519 oder alternativ eingesetzte Insert-Elemente sind vorzugsweise aus weichelastischem Gummi oder einem weichelastischen Elastomer gefertigt.

Ferner ist gezeigt, dass die Halterung und der vorzugsweise vorgesehene Insert 518 und 519 je einen Luftkanal 5188, 5190 aufweisen, die einen Ansaugkanal bilden, der mit der Saugvorrichtung 1113 (siehe Fig. 8b) verbunden oder verbindbar ist. Luft kann daher durch den Ansaugkanal angesaugt werden, um die Produkteinheit 8 oder deren Schale 880 in der Ausnehmung 5180 bzw. im Insert 519 zu halten. Die Saugvorrichtung 1113 ist vorzugsweise derart steuerbar, dass Luft angesaugt oder ausgestossen werden kann, um die Produkteinheiten 8 anzusaugen oder auszustossen.

Fig. 8e zeigt das erste Förderelement 511A von Fig. 8d in Explosionsdarstellung. Es ist ersichtlich, dass die Trägerplatte 585A eine Ausnehmung 5850 aufweist, in die die Halterung 518 eindrehbar ist.

## Patentansprüche

1. Vorrichtung (1) mit einer innerhalb eines zugeordneten Arbeitsraums (500) bewegbaren Klinge (11) zum Schneiden von Produkteinheiten (8), wie vereinzelte Nahrungsmittelprodukte, und mit einer Fördervorrichtung (5), in der die Produkteinheiten (8) vereinzelt in den Arbeitsraum (500) der Klinge (11) förderbar sind, **dadurch gekennzeichnet, dass** die Fördervorrichtung (5) wenigstens einen der Klinge (11) zugeordneten zweiteiligen Förderkanal (51A; 51B) aufweist, in dem auf einer Seite erste Förderelemente (511A, 512A) und auf der anderen Seite zweite Förderelemente (511B, 512B), die einander paarweise zugeordnet sind, geführt sind, dass die ersten und zweiten Förderelemente (511A, 512A; 511B, 512B) je eine Ausnehmung (5180) aufweisen, die zur anteilsweisen Aufnahme einer vereinzelten Produkteinheit (8) vorgesehen sind, und dass die einander zugewandten Seiten der ersten und zweiten Förderelemente (511A, 512A; 511B, 512B) den dazwischen frei liegenden Arbeitsraum (500) begrenzen, sodass die Klinge (11) innerhalb des Arbeitsraums (500) teilweise oder ganz durch die beidseits des Arbeitsraums (500) in den einander zugehörigen ersten und zweiten Förderelementen (511A, 512A; 511B, 512B) gehaltenen Produkteinheiten (8) hinein oder hindurch führbar ist.

2. Vorrichtung (1) nach Anspruch 1, **dadurch gekennzeichnet, dass** die ersten und zweiten Förderelemente (511A, 512A; 511B, 512B) mit einem gemeinsamen Trum (584A, 584B), einem Endlosband oder einer Endloskette, verbunden sind, oder dass die ersten Förderelemente (511A, 512A) mit einem ersten Trum (584A), einem Endlosband oder einer Endloskette, und dass die zweiten Förderelemente (511B, 512B) mit einem zweiten Trum (584B), einem Endlosband oder einer Endloskette, verbunden sind.

3. Vorrichtung (1) nach Anspruch 1 oder 2, **dadurch gekennzeichnet, dass** in den Ausnehmungen (5180) der ersten Förderelemente (511A, 512A) und/oder in den Ausnehmungen (5180) der zweiten Förderelemente (511B, 512B) ein elastischer Insert (519) angeordnet ist, der es erlaubt ein vereinzeltes Produkteinheit (8), dessen Abmessungen innerhalb eines Toleranzbereichs liegen, vorzugsweise spielfrei aufzunehmen.

4. Vorrichtung (1) nach Anspruch 1, 2 oder 3, **dadurch gekennzeichnet, dass** die ersten Förderelemente (511A, 512A) und die zweiten Förderelemente (511B, 512B) je eine Halterung (518) aufweisen, die mit der Ausnehmung (5180) versehen und zwischen einer geöffneten Position und einer geschlossenen Position drehbar mit einer Trägerplatte (585A; 585B) verbunden ist, welche mit dem Trum (584A, 584B) verbunden ist.

5. Vorrichtung (1) nach Anspruch 4, **dadurch gekennzeichnet, dass** die Halterung (518) und die Trägerplatte (585A; 585B) durch eine Feder (5852A, 5852B) miteinander verbunden sind, mittels der die Halterung (518) in die geöffnete Position gedreht wird.

6. Vorrichtung (1) nach Anspruch 4 oder 5, **dadurch gekennzeichnet, dass** die Halterung (518) mit einem Führungselement (517) versehen ist und dass die Fördervorrichtung (5) eine einteilige oder zweiteilige Kulisse (590; 590A, 590B) umfasst, die wenigstens eine Führungsbahn (595A; 595B) aufweist, entlang der die Führungselemente (517) führbar sind, um die zugehörige Halterung (518) in die geschlossene Position zu drehen.

7. Vorrichtung (1) nach Anspruch 4, 5 oder 6, **dadurch gekennzeichnet, dass** die Halterung (518) und/oder der Insert (519) mit einem Saugkanal (5188, 5199) versehen sind, der mit einer steuerbaren Saugvorrichtung (1112) verbunden oder verbindbar ist.

8. Vorrichtung (1) nach einem der Ansprüche 1-7, **dadurch gekennzeichnet, dass** die ersten Förderelemente (511A, 512A) und die zweiten Förderelemente (511B, 512B) drehbar gelagert sind oder dass die ersten Förderelemente (511A, 512A) und die zweiten Förderelemente (511B, 512B) um eine Achse drehbar gelagert sind, die zumindest annähernd senkrecht zu einer Schnittfläche verläuft, entlang der die Klinge (11) verschiebbar ist.

9. Vorrichtung (1) nach einem der Ansprüche 1-8, **dadurch gekennzeichnet, dass** die Klinge (11) an einer Klingenhalterung (2) befestigt ist, die mit einer von einem Gerüst (6) gehaltenen Antriebsvorrichtung (4) verbunden ist und die mittels der Antriebsvorrichtung (4) innerhalb des Arbeitsraums (500) drehbar und/oder entlang einem Arbeitsweg führbar ist, der linear oder entlang einer Kurve verläuft.

10. Vorrichtung (1) nach Anspruch 9, **dadurch gekennzeichnet, dass** die Antriebsvorrichtung (4) mehrere Aktuatoren (41, ..., 46) umfasst, die individuell steuerbar sind und die einerseits je über ein erstes Drehgelenk (31; ...; 37) mit der Klingenhalterung (2) und die andererseits je über ein zweites Drehgelenk (51; ...; 57) derart mit dem Gerüst verbunden sind, dass die Klingenhalterung (2) allein von den Aktuatoren (41, ..., 46) gehalten ist.

11. Vorrichtung (1) nach Anspruch 9 oder 10, **dadurch gekennzeichnet, dass** die Klingenhalterung (2) wenigstens zwei Klingen (11A, 11B) aufweist, die je einem Förderkanal (51A; 51B) und einem diesem zugehörigen Arbeitsraum (500) zugeordnet und innerhalb dieses Arbeitsraums (500) bewegbar sind.

12. Vorrichtung (1) nach Anspruch 10, **dadurch gekennzeichnet, dass** die Klingen (11A, 11B, ...) in einem zugehörigen Rahmen (110A, 110B, ...) mittels Spannvorrichtungen (9, 91, 92) festgespannt sind.

13. Vorrichtung (1) nach einem der Ansprüche 1-11, **dadurch gekennzeichnet, dass** wenigstens eine der Klingen (11A, 11B, ...) über ein Kopplungselement (12) und einen Energiewandler (13) mit einer Ultraschallquelle verbindbar oder verbunden ist.

14. Vorrichtung (1) nach einem der Ansprüche 1-13, **dadurch gekennzeichnet, dass** eine Trennvorrichtung (7) vorgesehen ist, die wenigstens ein Trennwerkzeug (72) sowie eine Betätigungsvorrichtung (72) zur Betätigung des Trennwerkzeugs (72) umfasst, welches in den Arbeitsraum (500) einführbar und betätigbar ist, um die mittels der wenigstens einen Klinge (11A, 11B, ...) angeschnittene Schale eines Nahrungsmittelprodukts (8) aufzutrennen.

15. Vorrichtung (1) nach einem der Ansprüche 12 - 14, **dadurch gekennzeichnet, dass** die Trennvorrichtung (7) von einem der Rahmen (110A, 110B, ...) gehalten ist.

## Claims

1. Device (1) with a blade (11) movable within an associated working space (500) for cutting product units (8), such as separated food products, and with a conveying device (5) in which the product units (8) can be conveyed individually into the working space (500) of the blade (11), **characterised in that** the conveying device (5) has, associated with the blade (11), at least one two-part conveying channel (51A; 51B), in which on one side first conveying elements (511A, 512A) and on the other side second conveying elements (511B, 512B), which are associated with one another in pairs, are guided, that the first and second conveying elements (511A, 512A; 511B, 512B) each have a recess (5180) which is provided for partially receiving a separated product unit (8), and **in that** the sides of the first and second conveying elements (511A, 512A; 511B, 512B), which are mutually facing one another, delimit the working space (500) exposed therebetween so that the blade (11) can be guided within the working space (500) partly or entirely into or through the product units (8) held on both sides of the working space (500) in the first and second conveying elements (511A, 512A; 511B, 512B) which are associated with one another.

2. Device (1) according to claim 1, **characterised in that** the first and second conveying elements (511A, 512A; 511B, 512B) are connected to a common endless member (584A, 584B), an endless belt or an endless chain, or that the first conveying elements (511A, 512A) are connected to a first endless member (584A), an endless belt or an endless chain, and that the second conveying elements (511B, 512B) are connected to a second endless member (584B), an endless belt or an endless chain.

3. Device (1) according to claim 1 or 2, **characterised in that** an elastic insert (519) is arranged in the recesses (5180) of the first conveying elements (511A, 512A) and/or in the recesses (5180) of the second conveying elements (511B, 512B), which insert (519) allows to accommodate a single product unit (8) with dimensions lying within a tolerance range preferably without play.

4. Device (1) according to claim 1, 2 or 3, **characterised in that** the first conveying elements (511A, 512A) and the second conveying elements (511B, 512B) each comprise a holder (518) which is provided with the recess (5180) and which is connected, rotatably between an open position and a closed position, to a carrier plate (585A; 585B) which is connected to the endless member (584A, 584B).

5. Device (1) according to claim 4, **characterised in that** the holder (518) and the carrier plate (585A; 585B) are connected to each other by a spring (5852A, 5852B) by means of which the holder (518) is rotated into the open position.

6. Device (1) according to claim 4 or 5, **characterised in that** the holder (518) is provided with a guide element (517) and that the conveying device (5) comprises a one-piece or two-piece guide (590; 590A, 590B) which has at least one guide track (595A; 595B) along which the guide elements (517) can be guided in order to rotate the associated holder (518) into the closed position.

7. Device (1) according to claim 4, 5 or 6, **characterised in that** the holder (518) and/or the insert (519) are provided with a suction channel (5188, 5199) which is connected or connectable to a controllable suction device (1112).

8. Device (1) according to one of the claims 1-7, **characterised in that** the first conveying elements (511A, 512A) and the second conveying elements (511B, 512B) are rotatably mounted or that the first conveying elements (511A, 512A) and the second conveying elements (511B, 512B) are rotatably mounted about an axis which is at least approximately perpendicular to a cutting surface along which the blade (11) is displaceable.

9. Device (1) according to one of the claims 1-8, **characterised in that** the blade (11) is attached to a blade holder (2) which is connected to a drive device (4) supported by a structure (6) and which can be rotated and/or guided by means of the drive device (4) within the working space (500) along a working path which extends linearly or along a curve.

10. Device (1) according to claim 9, **characterised in that** the drive device (4) comprises several actuators (41, ..., 46) which are individually controllable and which are connected on the one hand to the blade holder (2) via a first rotary joint (31; ...; 37) and on the other hand to the structure via a second rotary joint (51; ...; 57) in such a way that the blade holder (2) is held solely by the actuators (41, ..., 46).

11. Device (1) according to claim 9 or 10, **characterised in that** the blade holder (2) has at least two blades (11A, 11B), each of which associated with a conveying channel (51A; 51B) and an associated working space (500) and movable within this working space (500).

12. Device (1) according to claim 10, **characterised** that the blades (11A, 11B, ...) are clamped in an associated frame (110A, 110B, ...) by means of clamping devices (9, 91, 92).

13. Device (1) according to one of the claims 1-11, **characterised in that** at least one of the blades (11A, 11B, ...) is connectable or connected to an ultrasonic source via a coupling element (12) and an energy converter (13).

14. Device (1) according to one of the claims 1-13, **characterised in that** a separating device (7) is provided comprising at least one separating tool (72) and an actuating device (72) for actuating the separating tool (72), which is insertable into the working space (500) and actuatable to separate the shell of a food product (8) that has been cut by means of the at least one blade (11A, 11B, ...).

15. Device (1) according to one of the claims 12 - 14, **characterised in that** the separating device (7) is supported by one of the frames (110A, 110B, ...).

## Revendications

1. Dispositif (1) avec une lame (11) mobile à l'intérieur d'un espace de travail (500) associé pour couper des unités de produit (8), telles que des produits alimentaires séparés, et avec un dispositif de transport (5) dans lequel les unités de produit (8) peuvent être transportées individuellement dans l'espace de travail (500) de la lame (11), **caractérisé en ce que** le dispositif de transport (5) présente, associé à la lame (11), au moins un canal de transport en deux parties (51A; 51B), dans lequel sont guidés d'un côté des premiers éléments de transport (511A, 512A) et de l'autre côté des deuxièmes éléments de transport (511B, 512B), qui sont associés par paires, **en ce que** les premiers et deuxièmes éléments de transport (511A, 512A; 511B, 512B) présentent chacun un évidement (5180) qui est prévu pour recevoir une partie d'une unité de produit séparée, et **en ce que** les côtés des premier et deuxième éléments de transport (511A, 512A ; 511B, 512B), qui sont orientés l'un vers l'autre, délimitent l'espace de travail (500) exposé entre eux, de sorte que la lame (11) à l'intérieur de l'espace de travail (500) peut être guidée partiellement ou complètement dans ou à travers les unités de produit (8) maintenues des deux côtés de l'espace de travail (500) dans les premier et second éléments de transport mutuellement associés (511A, 512A ; 511B, 512B).

2. Dispositif (1) selon la revendication 1, **caractérisé en ce que** les premier et second éléments de transport (511A, 512A ; 511B, 512B) sont reliés à un brin commun (584A, 584B), une courroie ou une chaîne sans fin, ou que les premiers éléments de transport (511A, 512A) sont reliés à un premier brin (584A), une courroie ou une chaîne sans fin, et que les seconds éléments de transport (511B, 512B) sont reliés à un second brin (584B), une courroie ou une chaîne sans fin.

3. Dispositif (1) selon la revendication 1 ou 2, **caractérisé en ce que** dans les évidements (5180) des premiers éléments de transport (511A, 512A) et/ou dans les évidements (5180) des seconds éléments de transport (511B, 512B) est disposé un insert élastique (519) qui permet de recevoir une unité de produit séparée (8) dont les dimensions se situent dans une plage de tolérance, de préférence sans jeu.

4. Dispositif (1) selon la revendication 1, 2 ou 3, **caractérisé en ce que** les premiers éléments de transport (511A, 512A) et les seconds éléments de transport (511B, 512B) comprennent chacun un support (518) pourvu de l'évidement (5180) et relié de manière rotative, entre une position ouverte et une position fermée, à une plaque de support (585A ; 585B) reliée au chemin (584A, 584B).

5. Dispositif (1) selon la revendication 4, **caractérisé en ce que** le support (518) et la plaque de support (585A ; 585B) sont reliés l'un à l'autre par un ressort (5852A, 5852B) au moyen duquel le support (518) est tourné dans la position ouverte.

6. Dispositif (1) selon la revendication 4 ou 5, **caractérisé en ce que** le support (518) est pourvu d'un élément de guidage (517) et **en ce que** le dispositif de transport (5) comprend un coulisseau (590 ; 590A, 590B) en une ou deux parties ayant au moins une ligne de guidage (595A ; 595B) le long de laquelle les éléments de guidage (517) peuvent être guidés afin de faire tourner le support (518) associé dans la position fermée.

7. Dispositif (1) selon la revendication 4, 5 ou 6, **caractérisé en ce que** le support (518) et/ou l'insert (519) sont pourvus d'un canal d'aspiration (5188, 5199) qui est connecté ou peut être connecté à un dispositif d'aspiration contrôlable (1112).

8. Dispositif (1) selon une des revendications 1-7, **caractérisé en ce que** les premiers éléments de transport (511A, 512A) et les seconds éléments de transport (511B, 512B) sont montés rotatifs ou **en ce que** les premiers éléments de transport (511A, 512A) et les seconds éléments de transport (511B, 512B) sont montés rotatifs autour d'un axe au moins approximativement perpendiculaire à une surface de coupe le long de laquelle la lame (11) est déplaçable.

9. Dispositif (1) selon une des revendications 1-8, **caractérisé en ce que** la lame (11) est fixée à un porte-lame (2) qui est relié à un dispositif d'entraînement (4) porté par une structure (6) et qui peut être tourné et/ou guidé au moyen du dispositif d'entraînement (4) à l'intérieur de l'espace de travail (500) le long d'une trajectoire de travail qui s'étend linéairement ou le long d'une courbe.

10. Dispositif (1) selon la revendication 9, **caractérisé en ce que** le dispositif d'entraînement (4) comprend plusieurs actionneurs (41, ..., 46) qui peuvent être commandés individuellement et qui sont reliés d'une part au porte-lame (2) par l'intermédiaire d'une première articulation tournante (31 ; ... ; 37) et d'autre part à la structure par l'intermédiaire d'une deuxième articulation tournante (51 ; ... ; 57) de telle sorte que le porte-lame (2) est maintenu uniquement par les actionneurs (41, ..., 46).

11. Dispositif (1) selon la revendication 9 ou 10, **caractérisé en ce que** le porte-lames (2) présente au moins deux lames (11A, 11B), dont chacune est associée à un canal de transport (51A ; 51B) et à un espace de travail (500) associé à celui-ci et peut être déplacée à l'intérieur de cet espace de travail (500).

12. Dispositif (1) selon la revendication 10, **caractérisé en ce que** les lames (11A, 11B, ...) sont serrées dans un cadre associé (110A, 110B, ...) au moyen de dispositifs de serrage (9, 91, 92).

13. Dispositif (1) selon une des revendications 1-11, **caractérisé en ce qu'**au moins une des lames (11A, 11B, ...) est connectable ou connectée à une source d'ultrasons via un élément de couplage (12) et un convertisseur d'énergie (13).

14. Dispositif (1) selon une des revendications 1-13, **caractérisé en ce qu'**il est prévu un dispositif de séparation (7) comprenant au moins un outil de séparation (72) et un dispositif d'actionnement (72) pour actionner l'outil de séparation (72), qui peut être inséré dans l'espace de travail (500) et actionné pour séparer la coquille d'un produit alimentaire (8) coupé au moyen de la au moins une lame (11A, 11B, ...).

15. Dispositif (1) selon une des revendications 12 - 14, **caractérisé en ce que** le dispositif de séparation (7) est supporté par l'un des cadres (110A, 110B, ...).
